# EUROPEAN PATENT APPLICATION

(11) **EP 4 610 661 A1**
(43) Date of publication of application: **03.09.2025**
(21) Application number: 24160810.8
(22) Date of filing: 01.03.2024
(51) Int. Cl.: G01N 35/00, G01N 35/04, G01N 35/10

(54) **LABORATORY AUTOMATION SYSTEM AND METHOD**

(71) Applicant: Roche Diagnostics GmbH, 68305 Mannheim (DE)
(72) Inventor: Edelmann, Matthias, 68305 Mannheim (DE)
(74) Representative: Patentanwälte Ruff, Wilhelm, Beier, Dauster & Partner mbB

(57) **Abstract**

The invention relates to a laboratory automation system (1) for inspecting a laboratory sample container (20) and/or a sample (1) stored within an interior (21) of the laboratory sample container (20), comprising: a sample container carrier (2) for carrying a laboratory sample container (20), a transporting device (3) for horizontally transporting the sample container carrier (2), a lifting device (4), a code reading device (5) for reading a readable code (22) of the laboratory sample container (20) while the lifting device (4) moves the sample container carrier (2) between the transport device (3) and the uplift carrier-position, a gripping device (6) for gripping the laboratory sample container (20) if the sample container carrier (2) is in its uplift carrier-position and for vertically moving the gripped laboratory sample container (20) to a top position, and a sensor apparatus (7) for detecting at least one property of the laboratory sample container (20) and/or of the sample (S) in the top position.

## Description

The invention relates to a laboratory automation system for inspecting a laboratory sample container and/or a sample stored within an interior of the laboratory sample container. Furthermore, the invention relates to a method for operating such a laboratory automation system.

Typically, laboratory automation systems for inspecting a laboratory sample container and/or a sample stored within an interior of the laboratory sample container comprise several inspection components, said inspection components being arranged substantially horizontally relative to one another.

It is an object of the present invention to provide for a laboratory automation system for inspecting a laboratory sample container and/or a sample stored within an interior of the laboratory sample container, and to provide for a method for operating such a laboratory automation system, each having improved properties. In particular, a laboratory automation system is to be provided which has a particular compact horizontal system extension.

This object is solved by the subject-matter of the independent claims. Preferred embodiments are subject-matter of the dependent claims.

A laboratory automation system according to the invention is adapted for inspecting a laboratory sample container and/or a sample stored within an interior of the laboratory sample container. Thus, the laboratory automation system allows for an inspection of the laboratory sample container and/or the samples stored within the interior of the laboratory sample container to be carried out, in particular automatically. The laboratory automation system comprises a sample container carrier. The sample container carrier is adapted to carry a laboratory sample container. In particular, the sample container carrier is adapted to accept the laboratory sample container at least partially or only partially, in particular axially. Therein, the laboratory sample container may be a sample tube. The sample to be stored within the interior of the laboratory sample container can be a portion of a sample liquid, for example a blood sample, in particular from human blood.

The laboratory automation system comprises a transporting device. The transporting device is adapted to horizontally transport the sample container carrier, in particular only, if the sample container carrier is positioned on the transporting device. In case the sample container carrier is positioned on the transport device, the sample container carrier may be drive-coupled to the transporting device for horizontal transport.

The laboratory automation system comprises a lifting device. The lifting device is adapted to vertically move the sample container carrier to an uplift carrier-position of the sample container carrier relative to the transport device. In other words: The lifting device may be adapted to lift the sample container carrier from the transport device up so that the sample container carrier is brought to its uplift carrier-position. Furthermore, the lifting device is adapted to vertically move the sample container carrier back onto the transport device. Thus, if the sample container carrier is in its uplift carrier-position, the lifting device may be adapted to move the sample container carrier back onto the transport device, in particular so that the laboratory sample container then can be horizontally transported by the transporting device away from the lifting device. If the sample container carrier is positioned on the transport device, the sample container carrier may be in a low carrier-position, in particular with respect to gravity. The low carrier-position may be the lowest position with respect to gravity that the sample container carrier may be able to take within the laboratory automation system. The lifting device may be adapted to move the sample container carrier from the low carrier-position to the uplift carrier-position and back to the low carrier-position.

The laboratory automation system comprises a code reading device. The code reading device is adapted to read a readable code of a laboratory sample container carried by the sample container carrier. The readable code may be a visually readable code, for instance in form of a bar code or a QR-code or anything alike. Therein, the code reading device is adapted to read the readable code while the lifting device moves the sample container carrier between the transport device and the uplift carrier-position. In other words: During the sample container carrier being vertically moved by the lifting device, the code reading device can read the readable code of the laboratory sample container carried by the sample container carrier.

The laboratory automation system comprises a gripping device. The gripping device is adapted to grip the laboratory sample container carried by the sample container carrier if the sample container carrier is in its uplift carrier-position. In particular, the laboratory sample container to be gripped by the gripping device may only be in a gripping reach of the gripping device if the sample container carrier is in the uplift carrier-position. The gripping device is adapted to vertically move the gripped laboratory sample container to a top position of the laboratory sample container relative to the sample container carrier being in the uplift carrier-position. In other words: The sample container carrier may remain in the uplift carrier-position while the gripped laboratory sample container is vertically moved by the gripping device. Furthermore, the gripping device is adapted to vertically move the gripped laboratory sample container back to the sample container carrier being in the uplift carrier-position. Accordingly, the gripping device may be adapted to firstly decouple the laboratory sample container from the sample container carrier, then secondly vertically move the gripped laboratory sample container up from the sample container carrier to bring the gripped laboratory sample container to its top position, and then thirdly move the laboratory sample container back to the sample container carrier in order to recouple the laboratory sample container with the sample container carrier. After recoupling, the sample container carrier may be brought back to the transport device, vertically, by the lifting device.

The laboratory automation system comprises a sensor apparatus. The sensor apparatus is adapted to detect at least one property of the laboratory sample container and/or of the sample stored within the interior of the laboratory sample container, in particular only, if the sample container is in its top position. Thus, during the gripped laboratory sample container being arranged in its top position, the sensor apparatus may scan the laboratory sample container and/or the sample so as to detect the at least one property.

The lifting device and the gripping device in conjunction with the arrangement of the code reading device and the sensor apparatus relative to one another allow for implementation of the inspection of the laboratory sample container and/or the sample stored within the interior of the laboratory sample container with particular small consumption of horizontal system building space. Thus, a particular compact laboratory automation system may be achieved with respect to its horizontal system extension.

According to an embodiment of the invention, the gripping device is adapted to rotate the gripped laboratory sample container relative to the sensor apparatus. In particular, the gripping device may be adapted to rotate the gripped laboratory sample container relative to the sensor apparatus while and/or independently on vertically moving the gripped laboratory sample container relative to the sample container carrier being in the uplift carrier-position. In other words: The gripping device may be adapted to simultaneously both rotate the gripped laboratory sample container during the sample container carrier remains in the uplift carrier-position and vertically move the gripped laboratory sample container.

According to another embodiment of the invention, the lifting device is adapted to rotate the sample container carrier carrying the laboratory sample container relative to the code reading device. In particular, the lifting device is adapted to rotate the sample container carrier carrying the laboratory sample container while and/or independently on vertically moving the sample container carrier relative to the transport device. In other words: The sample container carrier carrying the laboratory sample container may be rotated by the lifting device relative to the code reading device during vertical movement and/or independently on the vertical movement of the laboratory sample container carrier relative to the transport device. Therein, the lifting device may be adapted to, in particular rotationally, align the readable code of the laboratory sample container in a predetermined code-orientation relative to the code reading device and/or in another predetermined code-orientation. In particular, the predetermined code-orientation and/or the other predetermined code-orientation may be within a window of the sample container carrier. The window of the sample container carrier may be transparent and/or see-through and/or recessed and/or cut-out, in particular wherein the laboratory sample container is in its predetermined code-orientation when the readable code is readable through the window. The other predetermined code-orientation may be defined for code-reading in other system stations of the laboratory automation system, said other stations being arranged down-stream regarding a direction of transport of the laboratory automation system.

According to another embodiment of the invention, the sensor apparatus comprises a camera device. Therein, the camera device is adapted to sense the sample stored within the interior of the laboratory sample container. In particular, the camera device is adapted to sense the sample within the interior of the laboratory sample container for performance of a sample quality check. In addition, or as an alternative, the camera device may be adapted to sense a color of a cap of the laboratory sample container.

According to another embodiment of the invention, the sensor apparatus comprises a liquid level detection device. The liquid level detection device may be a laser liquid level detection device. The liquid level detection device is adapted to sense at least one level of a liquid sample stored within the interior of the laboratory sample container. The level may correspond to a, in particular horizontal, separating surface in between two media forming the sample. The liquid level detection and/or the liquid level detection device may correspond, in particular at least partially, to the disclosure of WO2015/049298A1.

According to another embodiment of the invention, the lifting device comprises an engagement portion for engaging the sample container carrier to be moved vertically relative to the transport device. The engagement portion is vertically drivable relative to the transport device. In particular, the code reading device is attached to the engagement portion. Thus, the code reading device may be movable, in particular only, together with the engagement portion relative to the transport device. When engaged with the engagement portion, the sample container carrier may be rotatable relative to the engagement portion and/or relative to the code reading device.

According to another embodiment of the invention, the sensor apparatus comprises a laser sensor device. Therein, the laser sensor device is adapted to sense at least one geometric property of the laboratory sample container.

According to another embodiment of the invention, the laboratory sample container has a cap for sealing the interior of the laboratory sample container. Therein, the geometric property is a shape of the cap and/or a, in particular axial, height of the cap.

According to another embodiment of the invention, the geometric property is a, in particular axial, height of the laboratory sample container. Therein, the height of the laboratory sample container may include or exclude a cap of the laboratory sample container.

According to another embodiment of the invention, the gripping device is controlled dependent on at least one geometric property of the laboratory sample container. Therein, the at least one geometric property may be sensed by the sensor apparatus.

According to another embodiment of the invention, the gripping device is adapted to grip the laboratory sample container at an outer diameter of the laboratory sample container. In particular, the outer diameter of the laboratory sample container is present at a cap of the laboratory sample container. Therein, the gripping device may be adapted to sense and/or measure the outer diameter.

According to another embodiment of the invention, the uplift carrier-position is in between the transport device and the top position, in particular with respect to gravity.

According to another embodiment of the invention, the gripping device and the lifting device are vertically arranged in line, in particular mutually complementing their ranges of motion.

According to another embodiment of the invention, the transport device comprises a transporting component. The transporting component may comprise a conveyor belt. Furthermore, the transporting device comprises a driving device for driving the transporting component. The driving device may be adapted to drive the transporting component, in particular horizontally and/or along a direction of transport of the laboratory automation system.

A method according to the invention is intended for operating a laboratory automation system according to the invention as described above. According to a step a) of the method, the sample container carrier carrying a laboratory sample container is vertically moved to the uplift carrier-position. Further in accordance with step a), during vertically moving the sample container carrier to the uplift carrier-position, the sample container carrier is rotated to a predetermined code-orientation of the laboratory sample container, while, in particular simultaneously, at least one property of the laboratory sample container is sensed. According to a step b) of the method, the laboratory sample container is gripped, and the gripped laboratory sample container is vertically moved to its top position. According to a step c) of the method, the gripped laboratory sample container is rotated and at least one property of the sample stored within the interior of the laboratory sample container is detected. According to a step d) of the method, the gripped laboratory sample container is vertically moved back to the sample container carrier being in the uplift carrier-position. Therein, further according to step d), during vertically moving the gripped laboratory sample container back to the sample container carrier, the gripped laboratory sample container is rotated to the same or another predetermined code-orientation. According to a step e) of the method, the sample container carrier carrying the laboratory sample container is vertically moved back onto the transporting device. Preferably, the afore-mentioned steps of the method are carried out in consequence one after another, namely in the order: a), b), c), d), e).

The detection of the at least one property of the sample stored within the laboratory sample container may, in particular at least partially, correspond to a sample analysis as described in E P2246689A1.

In particular, the laboratory automation system may have a control unit. Therein, the control unit may be configured and/or programmed to control the components of the laboratory automation system according to the method.

Further advantages and features of the invention arise from the claims as well as from the following description of a preferred embodiment of the invention, which is depicted by the drawings. Therein, equal reference signs relate to equal or similar or functionally equal components.

It is to be understood that the features mentioned above as well as the features described below are not only usable in the stated combination, respectively, but also in other combinations or solely, without leaving the scope of the present invention.
- Fig. 1: schematically depicts, in a momentary front view snapshot, a laboratory automation system according to an embodiment of the invention, the laboratory automation system being operated in accordance with a method according to an embodiment of the invention,
- fig. 2: schematically illustrates, in another momentary front view snapshot, the laboratory automation system of fig. 1, and
- fig. 3: schematically illustrates, in another momentary front view snapshot, the laboratory automation system of figs. 1 and 2.

A laboratory automation system 1 is adapted for an inspection of a laboratory sample container 20 and/or for an inspection of a sample S stored within an interior 21 of the laboratory sample container 20. The laboratory sample container 20 may comprise a cap 23. The cap 23 may be adapted to seal the interior 21 of the laboratory sample container 20. The laboratory sample container 20 may be of substantial tubular shape.

The laboratory automation system 1 comprises a sample container carrier 2. The sample container carrier 2 is adapted to carry a laboratory sample container 20, for example in form of a sample tube.

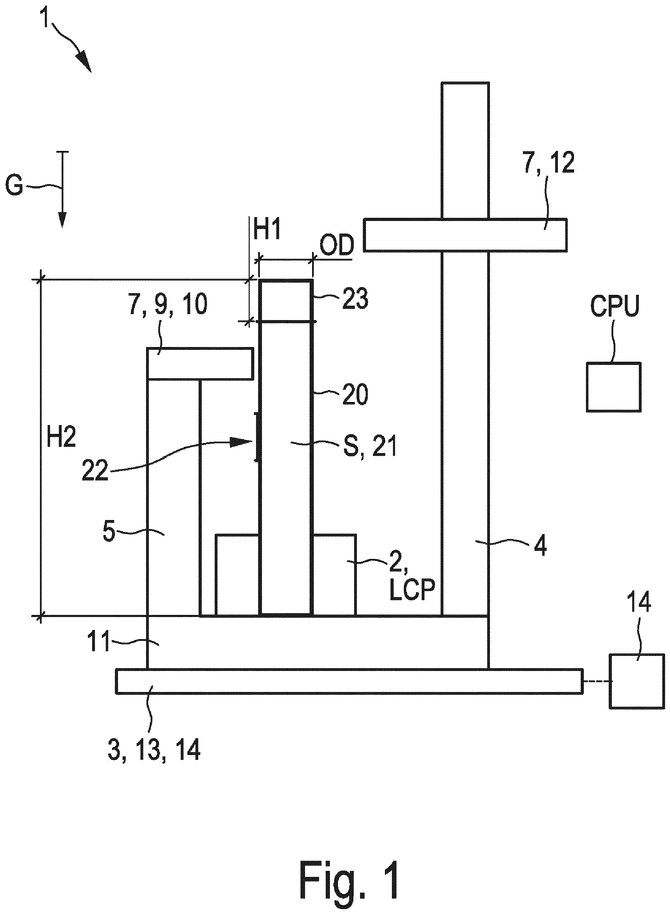

The laboratory automation system 1 comprises a transporting device 3. The transporting device 3 is adapted to horizontally transport the sample container carrier 2 if the sample container carrier 2 is positioned on the transporting device 3. The sample container carrier 2 being positioned on the transporting device 3 is exemplarily shown in fig. 1. For example, the transporting device 3 comprises a transporting component 13 and a driving device 15, the latter being adapted to drive the transporting component 13. For instance, the transporting component 13 may comprise a conveyor belt 14.

The laboratory automation system 1 comprises a lifting device 4. The lifting device 4 is adapted to vertically move the sample container carrier 2 in/to an uplift carrier-position UCP of the sample container carrier 2 relative to the transport device 3. Therein, the lifting device 4 is also adapted to vertically move the sample container carrier 2 back onto the transport device 3.

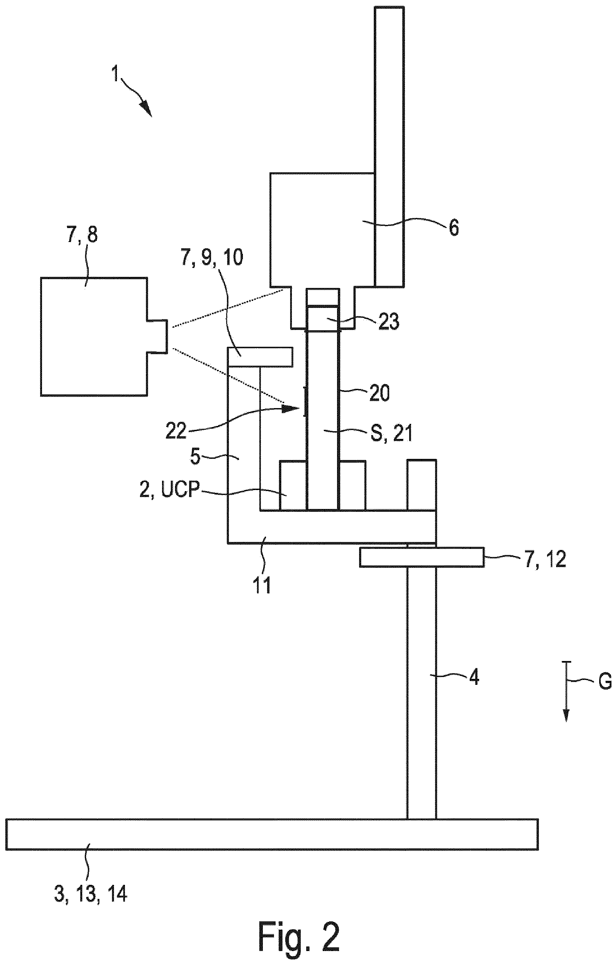

If the sample container carrier 2 is positioned on the transport device 3, the sample container carrier 2 may be in a low carrier-position LCP, in particular with respect to gravity G. Therein, the lifting device 4 may be adapted to move the sample container carrier 2 from the low carrier-position LCP to the uplift carrier-position UCP and back to the low carrier-position LCP. A vertical range of motion of the lifting device 4 can exemplary be derived from comparing figs. 1 and 2.

The laboratory automation system 1 comprises a code reading device 5. The code reading device 5 is adapted to read a readable code 22 of the laboratory sample container 20 carried by the sample container carrier 2. Therein, the code reading device 5 is adapted to read the readable code 22 while the lifting device 4 moves the sample container carrier 2 between the transport device 3 and the uplift carrier-position UCP, e.g. in the meantime between the momentary snapshots of figs. 1 and 2. The readable code 22 may be a bar code. The code reading device 5 may be a bar coder reader.

For example, the lifting device 4 is adapted to rotate the sample container carrier 2 while the sample container carrier 2 carries the laboratory sample container 20. Therin, the lifting device 4 is adapted to rotate the sample container carrier 2 relative to the code reading device 5. For instance, the sample container carrier 2 may be rotated by the lifting device 4 during vertically moving the sample container carrier 2 relative to the transport device 3 and/or independently on vertically moving the sample container carrier 2 relative to the transport device 3.

The lifting device 4 may be adapted to, for instance rotationally, align the readable code 22 of the laboratory sample container 20 in a predetermined code-orientation relative to the code reading device 5. In addition, or as an alternative, the lifting device 4 may be adapted to, for instance rotationally, align the readable code 22 of the laboratory sample container 20 in another predetermined code-orientation, for instance with respect to a future code reading. For example, the alignment of the readable code 22 may be performed with reference to a window of the sample container carrier 2, wherein the readable code 22 can be read through the window.

For example, the lifting device 4 comprises an engagement portion 11. The engagement portion 11 may be adapted to engage the sample container carrier 2 to be moved vertically relative to the transport device 3. The engagement portion 11 is vertically drivable relative to the transport device 3. For instance, the code reading device 5 is attached to the engagement portion 11. When engaged, the sample container carrier 2 may be able to be rotated relative to the engagement portion 11 and/or the code reading device 5 around a vertical spatial axis.

Furthermore, the laboratory automation system 1 comprises a gripping device 6. Therein, the gripping device 6 is adapted to grip the laboratory sample container 20 carried by the sample container carrier 2 if the sample container carrier 2 is in its uplift carrier-position UCP. In the momentary snapshot of fig. 2, the sample container carrier 2 is in its uplift carrier-position and the laboratory sample container 20 is currently being gripped.

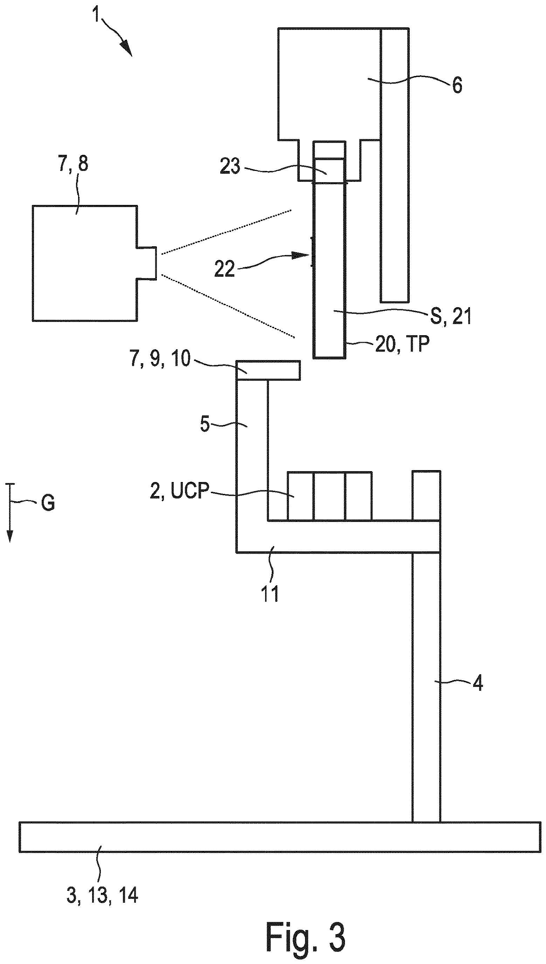

The gripping device 6 is furthermore adapted to vertically move the gripped laboratory sample container 20 to a top position TP of the laboratory sample container 20 relative to the sample container carrier 2, while the sample container carrier 2 is in the uplift carrier-position UCP. Therein, the gripping device 6 is also adapted to vertically move the gripped laboratory sample container 20 back to the sample container carrier 2 being in the uplift carrier-position UCP. A vertical range of motion of the gripping device 6 can exemplary be seen from figs. 2 and 3. For example, the uplift carrier-position UCP is in between the transport device 3 and the top position TP, in particular with respect to gravity G.

For example, the gripping device 6 and the lifting device 4 are vertically arranged in line. Therewith, the gripping device 6 and the lifting device 4 may be arranged so as to mutually complement their ranges of motion. In particular, the gripping device 6 and the lifting device 4 may be arranged so as to mutually complement their vertical ranges of motion.

The gripping device 6, for example, is adapted to grip the laboratory sample container 20 at an outer diameter OD of the laboratory sample container 20. The outer diameter OD may be present at the cap 23 of the laboratory sample container 20, Therein, the gripping device 6 may be adapted to sense the outer diameter OD while gripping. The outer diameter OD may correspond to an adjustable opening delimited by at least two gripping fingers of the gripping device 6.

The laboratory automation system 1 furthermore comprises a sensor apparatus 7. The sensor apparatus 7 is adapted to detect at least one property of the laboratory sample container 20. In addition, or as an alternative, the sensor apparatus 7 may be adapted to detect at least one property of the sample S stored within the interior 21 of the laboratory sample container 20. Either way, the sensor apparatus 7 may be adapted to detect the at least one property, for instance only, if the laboratory sample container 20 is in its top position TP.

For example, the gripping device 6 is adapted to rotate the gripped laboratory sample container 20 relative to the sensor apparatus 7. For instance, the gripping device 6 may be adapted to rotate the gripped laboratory sample container 20 while and/or independently on vertically moving the gripped laboratory sample container 20 relative to the sample container carrier 2.

During handling of the gripped laboratory sample container 20 by the gripping device 6, the sample container carrier 2 preferably remains in its uplift carrier-position UCP.

For example, the sensor apparatus 7 comprises a camera device 8. Therein, the camera device 8 is adapted to scan and/or sense the sample S stored within the interior 21 of the laboratory sample container 20. The camera device 8 may be adapted to sense the sample S for a sample quality check. In addition, or as an alternative, the camera device 8 may be adapted to sense a color of the cap 23 of the laboratory sample container 20.

For instance, the sensor apparatus 7 comprises a liquid level detection device 9. The liquid level detection device 9 may be adapted to sense at least one level of a liquid sample S stored within the interior 21 of the laboratory sample container 20. The liquid level detection device 9 may be configured in form of a laser liquid detection device 10.

For example, the sensor apparatus 7 comprises a laser sensor device 12. Therein, the laser sensor device 12 is adapted to sense at least one geometric property of the laboratory sample container 20. The geometric property may be a shape of the cap 23 of the laboratory sample container 20. In addition, or as an alternative, the geometric property may be a height H1 of the cap 23. In addition, or as an alternative, the geometric property may be a height H2 of the laboratory sample container 20, for example with or without cap 23.

For instance, the gripping device 6 is controlled dependent on at least one geometric property of the laboratory sample container 20. Therein, the at least one geometric property may be sensed by the sensor apparatus 7.

As indicated above, figs. 1 to 3 may be understood as momentary snapshots of the laboratory automation system 1 while a method for operating the laboratory automation system 1 is carried out, in particular to automatically inspect the laboratory sample container 20 and/or the sample S.

The laboratory automation system 1 may have a control unit CPU. The control unit CPU may be configured and/or programmed to control the components of the laboratory automation system 1 in accordance with the method.

When being operated according to the method, the laboratory automation system 1 may change its state from that of fig. 1 to that of fig. 2 to that of fig. 3 to that of fig. 2 to that of fig. 1. This change of state may correspond to steps of the method as described in the following. Therein, the numbering of the steps may correspond to their timely order.

According to a first step of the method, the sample container carrier 2 carrying the laboratory sample container 20 is vertically moved to the uplift carrier-position UCP. Therein, during vertically moving the sample container carrier 2 to the uplift carrier-position UCP, the sample container carrier 2 is rotated to a predetermined code-orientation of the laboratory sample container 20 while at least one property of the laboratory sample container 20 is sensed.

According to a second step of the method, the laboratory sample container 20 is gripped and vertically moved to its top position TP. Then, according to a third step of the method, the gripped laboratory sample container 20 is rotated and at least one property of the sample S stored within the interior 21 of the laboratory sample container 20 is detected.

According to a fourth step of the method, the gripped laboratory sample container 20 is vertically moved back to the sample container carrier 2, the sample container carrier 2 still being in the uplift carrier-position UCP. Therein, while moving the gripped laboratory sample container 20 back to the sample container carrier 2, the gripped laboratory sample container 20 is rotated to the same or another predetermined code-orientation, in particular relative to the sample container carrier 2. In this way, it may be ensured that the readable code 22 is in a known position relative to the sample container carrier 2. This can be beneficial to further processing of the sample S and/or the laboratory sample container 20, in particular if the laboratory sample container 20 and/or the sample S needs to be reidentified.

This also makes it possible that the laboratory sample container 20 is positioned at the lowest possible position in the sample container carrier 2. Since a type of the laboratory sample container 20 is known and the height of the laboratory sample container 20 relative to the sample container carrier 2 is measured, the laboratory sample container 20 can be placed in the sample container carrier 2 into the optimal position. Referring to the example of the figures, this may mean that since the tube type is known and the height of the tube relative to the sample container carrier 2 is measured, the container 20 can be placed in the carrier 2 into the optimal position. This may allow for more reliable and safe processing of the container 20 in the following steps in the lab.

According to a fifth step of the method, the sample container carrier 2 carrying the laboratory sample container 20 is vertically moved back from its uplift carrier-position UCP down onto the transporting device 3. The sample container carrier 2 can then be horizontally transported away from the lifting device 4 by the transporting device 3.

The method may be repetitiously carried out as to consequently inspect several laboratory sample containers 20 and/or samples S.

## Claims

1. Laboratory automation system (1) for inspecting a laboratory sample container (20) and/or a sample (S) stored within an interior (21) of the laboratory sample container (20), the laboratory automation system (1) comprising:
- a sample container carrier (2) being adapted to carry a laboratory sample container (20),
- a transporting device (3) being adapted to horizontally transport the sample container carrier (2) if the sample container carrier (2) is positioned on the transporting device (3),
- a lifting device (4) being adapted to vertically move the sample container carrier (2) to an uplift carrier-position (UCP) of the sample container carrier (2) relative to the transport device (3) and back onto the transport device (3),
- a code reading device (5) being adapted to read a readable code (22) of a laboratory sample container (20) carried by the sample container carrier (2) while the lifting device (4) moves the sample container carrier (2) between the transport device (3) and the uplift carrier-position (UCP),
- a gripping device (6) being adapted to grip the laboratory sample container (20) carried by the sample container carrier (2) if the sample container carrier (2) is in its uplift carrier-position (UCP), the gripping device (6) being adapted to vertically move the gripped laboratory sample container (20) to a top position (TP) of the laboratory sample container (20) relative to the sample container carrier (2) being in the uplift carrier-position (UCP) and back to the sample container carrier (2) being in the uplift carrier-position (UCP), and
- a sensor apparatus (7) being adapted to detect at least one property of the laboratory sample container (20) and/or of the sample (S) stored within the interior (21) of the laboratory sample container (20) if the laboratory sample container (20) is in its top position (TP).

2. Laboratory automation system (1) according to any of the preceding claims, **characterized in that**
- the gripping device (6) is adapted to rotate the gripped laboratory sample container (20) relative to the sensor apparatus (7), in particular while and/or independently on vertically moving the gripped laboratory sample container (20) relative to sample container carrier (2) being in the uplift carrier-position (UCP).

3. Laboratory automation system (1) according to any of the preceding claims, **characterized in that**
- the lifting device (4) is adapted to rotate the sample container carrier (2) carrying the laboratory sample container (20) relative to the code reading device (5), in particular while and/or independently on vertically moving the sample container carrier (2) relative to the transport device (3),
- in particular the lifting device (4) being adapted to, in particular rotationally, align the readable code (22) of the laboratory sample container (20) in a predetermined code-orientation relative to the code reading device (5) and/or another predetermined code-orientation, in particular within a window of the sample container carrier (2).

4. Laboratory automation system (1) according to any of the preceding claims, **characterized in that**
- the sensor apparatus (7) comprises a camera device (8), the camera device (8) being adapted to sense the sample (S) stored within the interior (21) of the laboratory sample container (20), in particular for a sample quality check, and/or the camera device (8) being adapted to sense a colour of a cap (23) of the laboratory sample container (20).

5. Laboratory automation system (1) according to any of the preceding claims, **characterized in that**
- the sensor apparatus (7) comprises a liquid level detection device (9), in particular in form of a laser liquid level detection device (10), the liquid level detection device (9) being adapted to sense at least one level of a liquid sample (S) stored within the interior (21) of the laboratory sample container (20).

6. Laboratory automation system (1) according to any of the preceding claims, **characterized in that**
- the lifting device (4) comprises an engagement portion (11) for engaging the sample container carrier (2) to be moved vertically relative to the transport device (3),
- the engagement portion (11) being vertically driveable relative to the transport device (3),
- in particular the code reading device (5) being attached to the engagement portion (11).

7. Laboratory automation system (1) according to any of the preceding claims, **characterized in that**
- the sensor apparatus (7) comprises a laser sensor device (12), the laser sensor device (12) being adapted to sense at least one geometric property of the laboratory sample container (20).

8. Laboratory automation system (1) according to claim 7, **characterized in that**
- the laboratory sample container (20) having a cap (23) for sealing the interior (21) of the laboratory sample container (20), the geometric property being a shape of the cap (23) and/or a height (H1) of the cap (23).

9. Laboratory automation system (1) according to claim 7 or 8, **characterized in that**
- the geometric property being a height (H2) of the laboratory sample container (20), in particular including or excluding a cap (23) of the laboratory sample container (20).

10. Laboratory automation system (1) according to any of the preceding claims, **characterized in that**
- the gripping device (6) is controlled dependent on at least one geometric property of the laboratory sample container (20), in particular the at least one geometric property being sensed by the sensor apparatus (7).

11. Laboratory automation system (1) according to any of the preceding claims, **characterized in that**
- the gripping device (6) is adapted to grip the laboratory sample container (20) at an outer diameter (OD) of the laboratory sample container (20), in particular at a cap (23) of the laboratory sample container (20),
- in particular the gripping device (6) being adapted to sense the outer diameter (OD).

12. Laboratory automation system (1) according to any of the preceding claims, **characterized in that**
- the uplift carrier-position (UCP) is in between the transport device (3) and the top position (TP), in particular with respect to gravity (G).

13. Laboratory automation system (1) according to any of the preceding claims, **characterized in that**
- the gripping device (6) and the lifting device (4) are vertically arranged in line, in particular mutually complementing their ranges of motion.

14. Laboratory automation system (1) according to any of the preceding claims, **characterized in that**
- the transporting device (3) comprises a transporting component (13), in particular in form of a conveyor belt (14), and a driving device (15) for driving the transporting component (13).

15. Method for operating a laboratory automation system (1) according to any of the preceding claims, the method comprising the following, in particular consecutively ordered, steps:
a) vertically moving the sample container carrier (2) carrying a laboratory sample container (20) to the uplift carrier-position (UCP) while rotating the sample container carrier (2) to a predetermined code-orientation of the laboratory sample container (20) and while sensing at least one property of the laboratory sample container (20);
b) gripping the laboratory sample container (20) and vertically moving the gripped laboratory sample container (20) to its top position (TP);
c) rotating the gripped laboratory sample container (20) and detecting at least one property of the sample (S) stored within the interior (21) of the laboratory sample container (20);
d) vertically moving the gripped laboratory sample container (20) back to the sample container carrier (2) being in the uplift carrier-position (UCP) while rotating the gripped laboratory sample container (20) to the same or another predetermined code-orientation; and
e) vertically moving the sample container carrier (2) carrying the laboratory sample container (20) back onto the transporting device (3).
